# EUROPEAN PATENT SPECIFICATION

(11) **EP 2 691 664 B1**
(45) Date of publication and mention of the grant of the patent: **18.09.2019**
(21) Application number: 12712867.6
(22) Date of filing: 30.03.2012
(51) Int. Cl.: F16C 32/04, H01F 3/04, H01F 7/08, H02K 1/16

(54) **AN IMPROVED AXIAL MAGNETIC BEARING**
VERBESSERTES AXIALES MAGNETLAGER
PALIER MAGNÉTIQUE AXIAL AMÉLIORÉ

(30) Priority: 30.03.2011 US 201161469221 P
(43) Date of publication of application: 05.02.2014
(73) Proprietor: ABB Schweiz AG, 5400 Baden (CH)
(72) Inventor: WU, Dezheng, Shanghai 200245 (CN); LIU, Yujing, 72210 Vasteras (SE); ENGLEBRETSON, Steven, Raleigh, NC (US)
(74) Representative: Gregorj S.r.l.
(86) International application number: PCT/US2012/031387
(87) International publication number: WO 2012/135586

(56) References cited:
- EP-A2- 0 848 174
- DE-A1-102008 034 554
- GB-A- 2 246 400
- US-A- 4 920 291
- US-A- 5 153 475
- US-A- 5 705 869
- US-A1- 2006 279 149

## Description

### BACKGROUND OF THE INVENTION

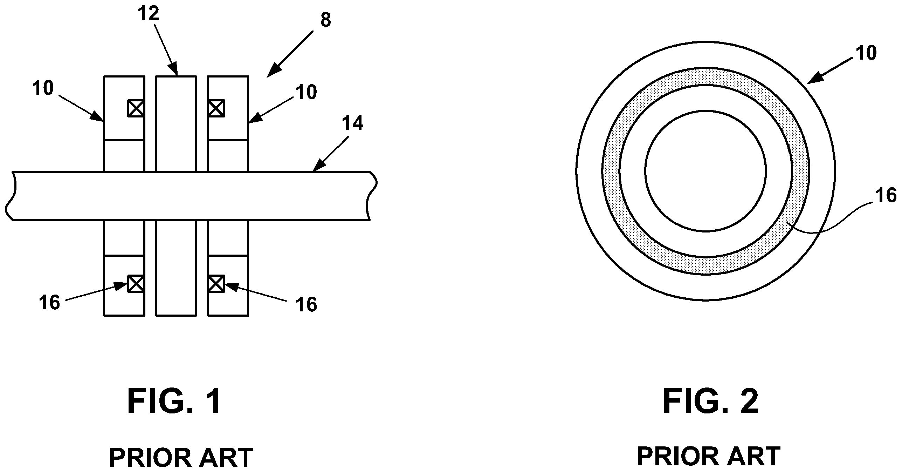

In rotating machinery, such as electric rotary machines or turbomachinery, axial (thrust) magnetic bearings are used to provide non-contact levitation in the axial direction. As shown in Figs. 1 and 2, a conventional axial magnetic bearing 8 has solid stators 10 and a solid rotor 12, each composed of a magnetically- permeable material. The rotor 12 is secured to a rotatable shaft 14. Typically, one or more circular grooves are formed in the stators 10, and circular coils 16 are inserted in the grooves, respectively. Each groove is coaxial with the shaft 14. This construction causes eddy currents to be induced in both the rotor 12 and the stators 10. The induced eddy currents inhibit a change of magnetic flux, thereby limiting the bandwith of the axial magnetic bearing 8, which limits dynamic performance. As a result, a conventional axial magnetic bearing is over-dimensioned to satisfy the dynamic force requirement at high frequency.

DE 10 2008 034 554 discloses an axial magnetic bearing according to the preamble of claim 1, wherein the layers of magnetically permeable material are connected radially to the rotatable shaft and then are winded round the shaft to give the layers.

### BRIEF DESCRIPTION OF THE DRAWINGS

The features, aspects, and advantages of the present invention will become better understood with regard to the following description, appended claims, and accompanying drawings where:
Fig. 1 is a side sectional view of a prior art axial magnetic bearing;
Fig. 2 is an inner end view of a stator of the prior art axial magnetic bearing;
Fig. 3 is a side sectional view of a first axial magnetic bearing constructed in accordance with a first embodiment of the present invention;
Fig. 4 is an inner end view of a stator of the first axial magnetic bearing of the present invention;
Fig. 5 is a sectional view of a rotor of the first axial magnetic bearing of the present invention, taken along the plane B-B in Fig. 3;
Fig. 6 is a sectional view of the rotor of the first axial magnetic bearing of the present invention, taken along the plane A-A in Fig. 3;
Fig. 7 is a side sectional view of a second axial magnetic bearing constructed in accordance with a second embodiment of the present invention;
Fig. 8 is a side sectional view of a third axial magnetic bearing constructed in accordance with a third embodiment of the present invention; and
Fig. 9 is a side sectional view of a fourth axial magnetic bearing constructed in accordance with a fourth embodiment of the present invention

### BRIEF DESCRIPTION OF INVENTION

It should be noted that in the detailed description that follows, identical components have the same reference numerals, regardless of whether they are shown in different embodiments of the present invention. It should also be noted that in order to clearly and concisely disclose the present invention, the drawings may not necessarily be to scale and certain features of the invention may be shown in somewhat schematic form.

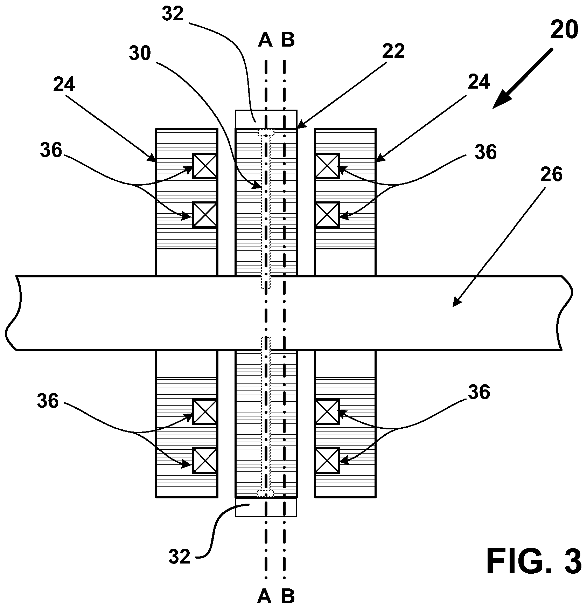

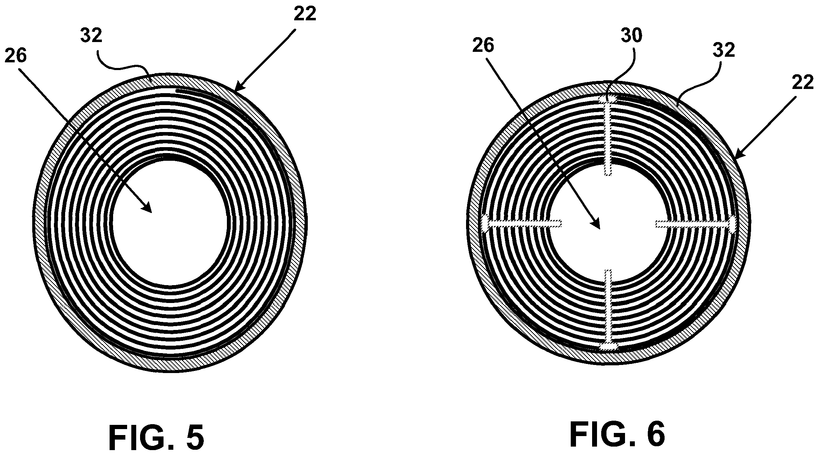

In accordance with the present invention, an improved axial magnetic bearing 20 for a rotating machine is provided. The axial magnetic bearing 20 addresses deficiencies in the prior art. Referring now to Figs. 3-6, the axial magnetic bearing 20 generally includes a rotor 22 disposed between a pair of stators 24. It should be appreciated, however, that in other embodiments, the rotor 22 may be disposed next to a single stator 24.

The rotor 22 is secured to a rotatable shaft 26 and is formed from layers (or laminations) of magnetically permeable material, such as carbon steel, silicon steel or amorphous metal. One or more strips or sheets of the magnetically-permeable material may be wound onto the shaft 26 to form a roll comprised of turns or layers of the magnetically-permeable material. The layers are arranged one on top of the other in a radial direction and are secured to the shaft 26 by a plurality of radially-extending bolts 30, which are composed of a non-conductive material. The bolts 30 extend through the layers and into the shaft 26, with ends of the bolts 30 being securedly held in the shaft 26. In addition, an outer retaining sleeve 32 may be disposed over the roll of layers to prevent relative movement of the layers in an axial or circumferential direction. The retaining sleeve 32 is composed of a non-magnetic material, such as a fiber-reinforced dielectric plastic or stainless steel.

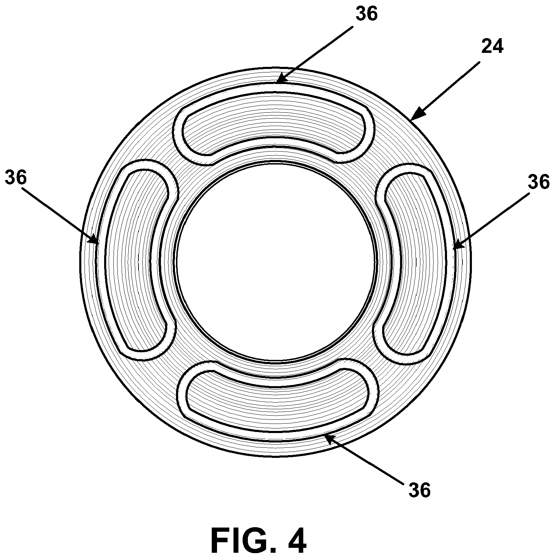

The stators 24 are mounted so as to be fixed in position. The shaft 26 extends through center openings in the stators 24 so as to be rotatably and axially moveble relative to the stators 24. Each stator 24 is also formed from layers (or laminations) of magnetically- permeable material, such as carbon steel, silicon steel or amorphous metal. One or more strips or sheets of the magnetically-permeable material may be wound to form a roll comprised of turns or layers of the magnetically-permeable material. The layers are arranged one on top of the other in a radial direction. The layers may be secured to a stator frame (not shown) by a plurality of radially-extending bolts, which are composed of a non-conductive material. The bolts extend through the layers and into the stator frame, with ends of the bolts being securely held in the stator frame. A plurality of endless grooves are formed in an inner or first end of each stator 24. Each groove is generally kidney-shaped and is not co-axial with the shaft 26. Instead, the grooves in each stator 24 are circumferentially spaced-apart in a circular configuration that is co-axial with the shaft 26. In each stator 24, the grooves are aligned in the axial direction of the shaft 26, i.e., are disposed in the same radial plane. The grooves may be formed by machining after the stators 24 have been wound and/otherwise formed. A coil 36 is mounted inside each groove. The coils 36 are formed from one or more lengths of a conductive material, such as copper, and are connected to a source of power. The power to each coil 36 may be provided from separate amplifiers that are separately controllable. In Fig. 4, four grooves and four coils 36 are shown. More or fewer grooves and coils 36 may be provided. The grooves and coils 36 of the stators 54 face the rotor 22. Thus, each end of the rotor 22 faces a plurality of coils 36.

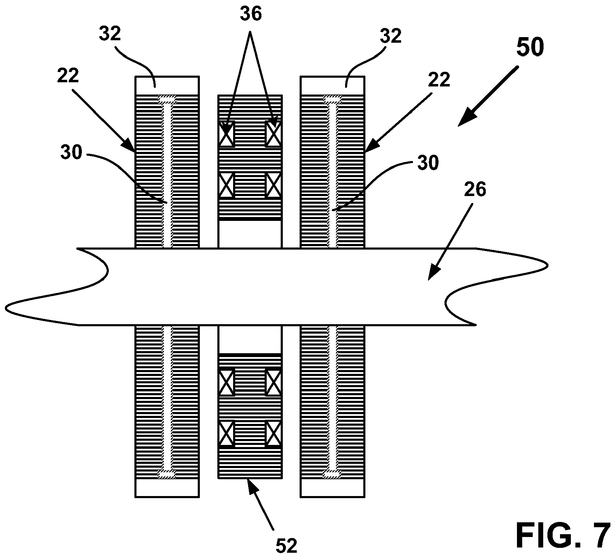

Referring now to Fig. 7, there is shown an axial magnetic bearing 50 constructed in accordance with a second embodiment of the present invention. The axial magnetic bearing 50 includes a single fixed stator 52 disposed between two rotors 22 secured to the shaft 26. The stator 52 has the same construction as the stator 24, except the stator 52 has a plurality of endless grooves formed in both first and second ends of the stator 52, with a coil 36 being mounted in each groove. In this manner, the grooves and the coils 36 in the first and second ends face the rotors 22, respectively. In each of the first and second ends of the stator 52, the endless grooves are formed in the same manner and have the same configuration as shown in Fig. 4 and as described above.

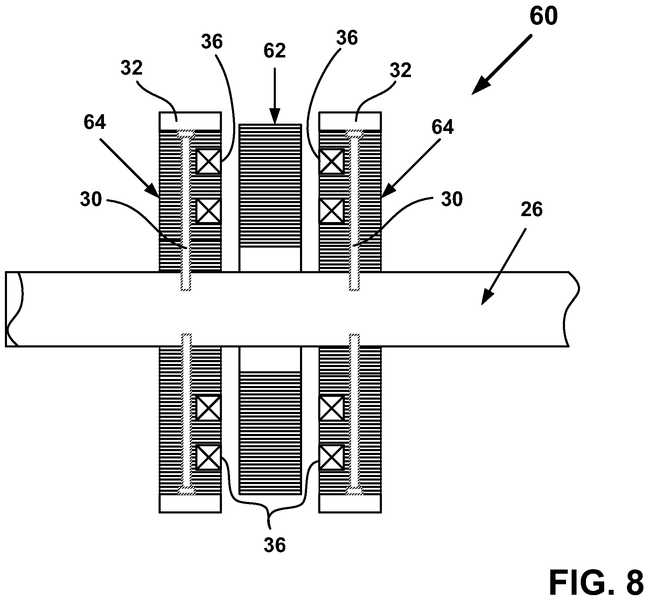

Referring now to Fig. 8 there is shown an axial magnetic bearing 60 constructed in accordance with a third embodiment of the present invention. The axial magnetic bearing 60 includes a single fixed stator 62 disposed between two rotors 64 secured to the shaft 26. The stator 62 has the same construction as the stator 24, except the stator 62 has no grooves formed therein and no coils 36. Each rotor 64 has the same construction as the rotor 22, except each rotor 64 has a plurality of endless grooves formed in an inner or first end of each rotor 64. A coil 36 is mounted in each of the grooves. With the grooves and the coils 36 being formed in the inner ends of the rotors 64, the coils 36 in each rotor 64 face the stator 24. In each of the rotors 64, the endless grooves are formed in the same manner and have the same configuration as shown in Fig. 4 and as described above.

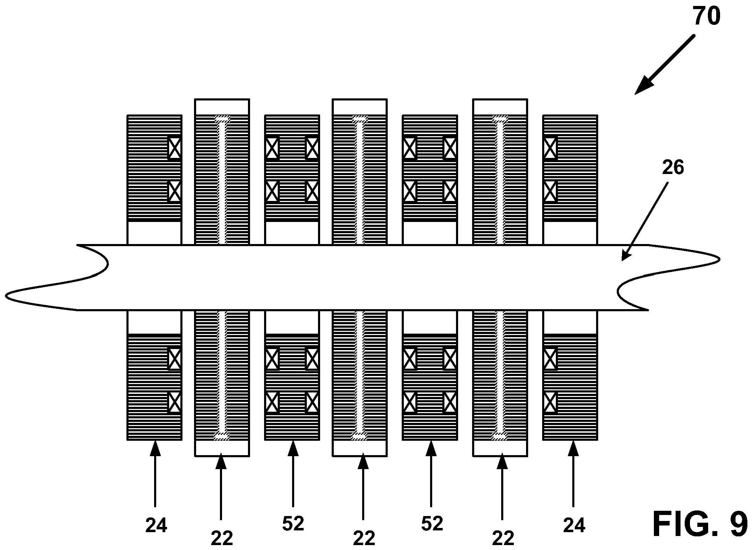

Referring now to Fig. 9 there is shown an axial magnetic bearing 70 constructed in accordance with a fourth embodiment of the present invention. The axial magnetic bearing 90 includes a plurality of fixed stators and a plurality of rotors 22 secured to the shaft 26. Three rotors 22 and four stators are shown in Fig. 9. The rotors 22 and the stators are arranged in alternating manner, with each rotor 22 being disposed between a pair of stators. The stators include a pair of stators 52 described above in the second embodiment and a pair of stators 24 described above in the first embodiment. The stators 24 are disposed outward from, and bracket, the rotors 22 and the stators 52. With the foregoing arrangement, each end of each rotor 22 faces a plurality of coils 36.

It should be appreciated that axial magnetic bearings having multiple rotors and multiple stators, but with different numbers of rotors and stators and different arrangements may be provided without departing from the scope of the present invention.

It should further be appreciated that in other embodiments of the present invention, each rotor 22, 64 and/or each stator 24, 52, 62 may be only partially constructed of layers of magnetic material. More specifically, each rotor 22, 64 and/or each stator 24, 52, 62 may include one or more portions composed of a solid material and one or more other portions comprised of layers of magnetic material. The solid material may be magnetic or non-magnetic. For example, each rotor 22, 64 and each stator 24, 52, 62 may include a radially-inner portion composed of cast carbon steel and a radially-outer portion comprised of layers of silicon steel and/or amorphous metal.In each of the axial magnetic bearings 20, 50, 60, 70, one or more position sensors (not shown) are provided to detect the displacement of each rotor (22 or 64) in the axial direction. One or more displacement signals from the one or more sensors are transmitted to a digital controller that is connected to the amplifier(s). Based on the displacement signal(s), the controller sends one or more control signals to the amplifier(s) to adjust the current in the coils 36. In this manner, electromagnetic force is generated by the coils 36 to control the axial position of each rotor (22 or 64).

In each of the axial magnetic bearings 20, 50, 60, 70, electromagnetic flux travels in the axial and circumferential directions. Thus, induced eddy currents are significantly reduced, thereby improving dynamic performance. Another benefit of the axial magnetic bearings 20, 50, 60, 70 is fault tolerance. Since multiple coils 36 are used in each stator (24, 52) and/or each rotor 64, each axial magnetic bearing 20, 50, 60, 70 can still provide partial axial force even if some of the coils 36 fail. The provision of multiple amplifiers further increases redundancy.

It is to be understood that the description of the foregoing exemplary embodiment(s) is (are) intended to be only illustrative, rather than exhaustive, of the present invention. Those of ordinary skill will be able to make certain additions, deletions, and/or modifications to the embodiment(s) of the disclosed subject matter without departing from the invention as defined by the appended claims.

## Claims

1. An axial magnetic bearing for a rotating machine, comprising
a rotatable shaft (26);
at least one fixed stator (24, 52, 62), each stator (24, 52, 62) comprising layers of a first magnetically-permeable material; and
a rotor (22, 64) secured to the shaft (26) and disposed adjacent to the at least one stator (24, 52, 62), the rotor (22, 64) comprising layers of a second magnetically-permeable material that is wound onto the rotatable shaft (26), the layers being arranged one on top of another in a radial direction of the rotor (22, 64), **characterized in that** the layers of a second magnetically-permeable material are in the form of a roll.

2. The axial magnetic bearing of claim 1, wherein each stator (24, 52) has a plurality of grooves formed therein, the grooves being spaced-apart circumferentially.

3. The axial magnetic bearing of claim 2, wherein a coil (36) is mounted inside each groove.

4. The axial magnetic bearing of claim 3, further comprising:
a power supply connected to the coils (36); and
a controller for controlling the supply of power to the coils (36).

5. The axial magnetic bearing of claim 2, wherein each groove is endless.

6. The axial magnetic bearing of claim 5, wherein each groove is not co-axial with the shaft.

7. The axial magnetic bearing of claim 3, wherein the at least one stator (24, 52) comprises a pair of stators and wherein the rotor is disposed between the stators.

8. The axial magnetic bearing of claim 7, wherein in each stator (24, 52), the grooves with the coils (36) mounted therein are formed in an inner end of the stator (24, 52) that faces the rotor (22).

9. The axial magnetic bearing of claim 1, wherein the rotor (22, 64) is a first rotor (22, 64) and the axial magnetic bearing (20, 50, 60, 70) further comprises a second rotor (22, 64); and
wherein the at least one stator (24, 52, 62) comprises a first stator (52) disposed between the first and second rotors (22, 64), the first stator (52) having opposing ends facing the first and second rotors (22, 64), respectively.

10. The axial magnetic bearing of claim 9, wherein each of the ends of the first stator (52) has a plurality of grooves formed therein, the grooves being spaced-apart circumferentially; and
wherein a coil (36) is mounted inside each groove of the first stator (52).

11. The axial magnetic bearing of claim 10, further comprising a third rotor (22, 64); and
wherein the at least one stator (24, 52, 62) further comprises a second stator (52) disposed between the second rotor (22, 64) and the third rotor (22, 64), the second stator (52) having opposing ends; and
wherein each of the ends of the second stator (52) has a plurality of grooves formed therein, the grooves being spaced-apart circumferentially; and
wherein a coil (36) is mounted inside each groove of the second stator (52).

12. The axial magnetic bearing of claim 11, wherein the at least one stator (24, 52, 62) further comprises third and fourth stators (24), the third stator (24) being disposed adjacent to the first rotor (22, 64) and the fourth stator (24) being disposed adjacent to the third rotor (22, 64);
wherein the third and fourth stators (24) each have an inner end, each of the inner ends having a plurality of grooves formed therein, the grooves being spaced-apart circumferentially; and
wherein a coil (36) is mounted inside each groove in the third and fourth stators (52).

13. The axial magnetic bearing of claim 9, wherein the first and second rotors (64) each have an inner end facing the stator (62), each of the inner ends having a plurality of grooves formed therein, the grooves being spaced-apart circumferentially and not co-axial with the rotatable shaft (26); and
wherein a coil (36) is mounted inside each groove in the first and second rotors (64).

14. The axial magnetic bearing of claim 1, wherein the first magnetically-permeable material is the same as the second magnetically-permeable material.

15. The axial magnetic bearing of claim 1, wherein the first and second magnetically-permeable materials comprise silicon steel.

## Patentansprüche

1. Axialmagnetlager für eine drehende Maschine, umfassend eine drehbare Welle (26);
wenigstens einen festen Ständer (24, 52, 62), wobei jeder Ständer (24, 52, 62) Schichten eines ersten magnetisch permeablen Materials umfasst; und
einen Rotor (22, 64), der an der Welle (26) befestigt und angrenzend an den wenigstens einen Ständer (24, 52, 62) angeordnet ist, wobei der Rotor (22, 64) Schichten eines zweiten magnetisch permeablen Materials umfasst, das auf die drehbare Welle (26) gewickelt ist, wobei die Schichten in radialer Richtung des Rotors (22, 64) übereinander eingerichtet sind, **dadurch gekennzeichnet, dass** die Schichten eines zweiten magnetisch permeablen Materials in der Form einer Rolle sind.

2. Axialmagnetlager nach Anspruch 1, wobei jeder Ständer (24, 52) mehrere darin ausgebildete Rillen aufweist, wobei die Rillen umlaufend beabstandet sind.

3. Axialmagnetlager nach Anspruch 2, wobei eine Spule (36) innerhalb jeder Rille gelagert ist.

4. Axialmagnetlager nach Anspruch 3, ferner Folgendes umfassend:
eine Stromversorgung, die mit den Spulen (36) verbunden ist; und
eine Steuerung zum Steuern der Versorgung von Strom zu den Spulen (36).

5. Axialmagnetlager nach Anspruch 2, wobei jede Rille endlos ist.

6. Axialmagnetlager nach Anspruch 5, wobei jede Rille nicht koaxial mit der Welle ist.

7. Axialmagnetlager nach Anspruch 3, wobei der wenigstens eine Ständer (24, 52) ein Ständerpaar umfasst und wobei der Rotor zwischen den Ständern angeordnet ist.

8. Axialmagnetlager nach Anspruch 7, wobei in jedem Ständer (24, 52) die Rillen mit den darin gelagerten Spulen (36) in einem inneren Ende des Ständers (24, 52), das dem Rotor (22) zugewandt ist, ausgebildet sind.

9. Axialmagnetlager nach Anspruch 1, wobei der Rotor (22, 64) ein erster Rotor (22, 64) ist und das Axialmagnetlager (20, 50, 60, 70) ferner einen zweiten Rotor (22, 64) umfasst; und
wobei der wenigstens eine Ständer (24, 52, 62) einen ersten Ständer (52) umfasst, der zwischen dem ersten und dem zweiten Rotor (22, 64) angeordnet ist, wobei der erste Ständer (52) gegenüberliegende Enden aufweist, die dem ersten beziehungsweise dem zweiten Rotor (22, 64) zugewandt sind.

10. Axialmagnetlager nach Anspruch 9, wobei jedes der Enden des ersten Ständers (52) mehrere darin ausgebildete Rillen aufweist, wobei die Rillen umlaufend beabstandet sind; und
wobei eine Spule (36) innerhalb jeder Rille des ersten Ständers (52) gelagert ist.

11. Axialmagnetlager nach Anspruch 10, ferner umfassend einen dritten Rotor (22, 64); und
wobei der wenigstens eine Ständer (24, 52, 62) ferner einen zweiten Ständer (52) umfasst, der zwischen dem zweiten Rotor (22, 64) und dem dritten Rotor (22, 64) angeordnet ist, wobei der zweite Ständer (52) gegenüberliegende Enden aufweist; und
wobei jedes der Enden des zweiten Ständers (52) mehrere darin ausgebildete Rillen aufweist, wobei die Rillen umlaufend beabstandet sind; und
wobei eine Spule (36) innerhalb jeder Rille des zweiten Ständers (52) gelagert ist.

12. Axialmagnetlager nach Anspruch 11, wobei der wenigstens eine Ständer (24, 52, 62) ferner einen dritten und einen vierten Ständer (24) umfasst, wobei der dritte Ständer (24) angrenzend an den ersten Rotor (22, 64) angeordnet ist und der vierte Ständer (24) angrenzend an den dritten Rotor (22, 64) angeordnet ist;
wobei der dritte und der vierte Ständer (24) jeweils ein inneres Ende aufweisen, wobei jedes der inneren Enden mehrere darin ausgebildete Rillen aufweist, wobei die Rillen umlaufend beabstandet sind; und
wobei eine Spule (36) innerhalb jeder Rille in dem dritten und dem vierten Ständer (52) gelagert ist.

13. Axialmagnetlager nach Anspruch 9, wobei der erste und der zweite Rotor (64) jeweils ein inneres Ende, das dem Ständer (62) zugewandt ist, aufweisen, wobei jedes der inneren Enden mehrere darin ausgebildete Rillen aufweist, wobei die Rillen umlaufend beabstandet sind und nicht koaxial mit der drehbaren Welle (26) sind; und
wobei eine Spule (36) innerhalb jeder Rille in dem ersten und dem zweiten Rotor (64) gelagert ist.

14. Axialmagnetlager nach Anspruch 1, wobei das erste magnetisch permeable Material dasselbe ist wie das zweite magnetisch permeable Material.

15. Axialmagnetlager nach Anspruch 1, wobei das erste und das zweite magnetisch permeable Material Siliziumstahl umfassen.

## Revendications

1. Palier magnétique axial pour une machine tournante, comprenant un arbre rotatif (26) ;
au moins un stator fixe (24, 52, 62), chaque stator (24, 52, 62) comprenant des couches d'un premier matériau magnétiquement perméable ; et
un rotor (22, 64) fixé à l'arbre (26) et placé de manière adjacente audit stator (24, 52, 62), le rotor (22, 64) comprenant des couches d'un second matériau magnétiquement perméable qui est enroulé sur l'arbre rotatif (26), les couches étant placées les unes sur les autres dans une direction radiale du rotor (22, 64), **caractérisé en ce que** les couches d'un second matériau magnétiquement perméable se présentent sous la forme d'un rouleau.

2. Palier magnétique axial selon la revendication 1, dans lequel chaque stator (24, 52) a une pluralité de rainures formées dans celui-ci, les rainures étant espacées de manière circonférentielle.

3. Palier magnétique axial selon la revendication 2, dans lequel une bobine (36) est montée à l'intérieur de chaque rainure.

4. Palier magnétique axial selon la revendication 3, comprenant en outre :
une alimentation électrique connectée aux bobines (36) ; et
un dispositif de commande pour commander l'alimentation en électricité des bobines (36).

5. Palier magnétique axial selon la revendication 2, dans lequel chaque rainure est sans fin.

6. Palier magnétique axial selon la revendication 5, dans lequel chaque rainure n'est pas coaxiale à l'arbre.

7. Palier magnétique axial selon la revendication 3, dans lequel au moins un stator (24, 52) comprend une paire de stators et dans lequel le rotor est placé entre les stators.

8. Palier magnétique axial selon la revendication 7, dans lequel dans chaque stator (24, 52), les rainures avec les bobines (36) montées dans celles-ci sont formées dans une extrémité interne du stator (24, 52) qui fait face au rotor (22).

9. Palier magnétique axial selon la revendication 1, dans lequel le rotor (22, 64) est un premier rotor (22, 64) et le palier magnétique axial (20, 50, 60, 70) comprend en outre un deuxième rotor (22, 64) ; et
dans lequel l'au moins un stator (24, 52, 62) comprend un premier stator (52) placé entre les premier et deuxième rotors (22, 64), le premier stator (52) ayant des extrémités opposées faisant face aux premier et deuxième rotors (22, 64), respectivement.

10. Palier magnétique axial selon la revendication 9, dans lequel chacune des extrémités du premier stator (52) a une pluralité de rainures formées dans celle-ci, les rainures étant espacées de manière circonférentielle ; et
dans lequel une bobine (36) est montée à l'intérieur de chaque rainure du premier stator (52).

11. Palier magnétique axial selon la revendication 10, comprenant en outre un troisième rotor (22, 64) ; et
dans lequel l'au moins un stator (24, 52, 62) comprend en outre un deuxième stator (52) placé entre le deuxième rotor (22, 64) et le troisième rotor (22, 64), le deuxième stator (52) ayant des extrémités opposées ; et
dans lequel chacune des extrémités du deuxième stator (52) a une pluralité de rainures formées dans celle-ci, les rainures étant espacées de manière circonférentielle ; et
dans lequel une bobine (36) est montée à l'intérieur de chaque rainure du deuxième stator (52).

12. Palier magnétique axial selon la revendication 11, dans lequel l'au moins un stator (24, 52, 62) comprend en outre des troisième et quatrième stators (24), le troisième stator (24) étant placé de manière adjacente au premier rotor (22, 64) et le quatrième stator (24) étant placé de manière adjacente au troisième rotor (22, 64) ;
dans lequel les troisième et quatrième stators (24) ont chacun une extrémité interne, chacune des extrémités internes ayant une pluralité de rainures formées dans celle-ci, les rainures étant espacées de manière circonférentielle ; et
dans lequel une bobine (36) est montée à l'intérieur de chaque rainure dans les troisième et quatrième stators (52).

13. Palier magnétique axial selon la revendication 9, dans lequel les premier et second rotors (64) ont chacun une extrémité interne faisant face au stator (62), chacune des extrémités internes ayant une pluralité de rainures formées dans celle-ci, les rainures étant espacées de manière circonférentielle et non coaxiales à l'arbre rotatif (26) ; et
dans lequel une bobine (36) est montée à l'intérieur de chaque rainure dans les premier et second rotors (64).

14. Palier magnétique axial selon la revendication 1, dans lequel le premier matériau magnétiquement perméable est identique au second matériau magnétiquement perméable.

15. Palier magnétique axial selon la revendication 1, dans lequel les premier et second matériaux magnétiquement perméables comprennent de l'acier au silicium.
